# EUROPEAN PATENT SPECIFICATION

(11) **EP 4 321 755 B1**
(45) Date of publication and mention of the grant of the patent: **14.05.2025**
(21) Application number: 23189989.9
(22) Date of filing: 07.08.2023
(51) Int. Cl.: F04B 43/00, F04B 45/04, F04B 53/18, F04B 43/02, F04B 43/04, F04B 45/047

(54) **DIAPHRAGM PUMP**
MEMBRANPUMPE
POMPE À MEMBRANE

(30) Priority: 08.08.2022 JP 2022126362
(43) Date of publication of application: 14.02.2024
(73) Proprietor: Mabuchi Motor Oken Co., Ltd., Tokyo 206-0812 (JP)
(72) Inventor: ITAHARA, Kazuki, Inagi-shi, 206-0812 (JP); NOZAWA, Shinnosuke, Inagi-shi, 206-0812 (JP)
(74) Representative: Samson & Partner Patentanwälte mbB

(56) References cited:
- CN-A- 109 098 962
- JP-A- 2003 035 267
- JP-B2- 4 307 867
- JP-B2- 7 045 058
- JP-U- H0 738 679

## Description

### Background of the Invention

The present invention relates to a diaphragm pump including an oil reservoir that retains a lubricating oil in the bearing portion of a driving body configured to convert a rotation into a reciprocating motion.

A conventional diaphragm pump of this type is a diaphragm pump disclosed in Japanese Patent No. 7045058 (document 1). The diaphragm pump includes a crank body that is driven by a motor to rotate, a driving shaft that is fixed to the crank body and inclined, a driving body including a shaft portion rotatably supported by the driving shaft, and a diaphragm including a deformation portion that forms a pump chamber. The driving body includes an arm portion extending outward in the radial direction from the end portion of the shaft portion. The driving body converts the rotation of the motor into a reciprocating motion, and transfers the reciprocating motion from the arm portion to the deformation portion of the diaphragm.

The shaft portion of the driving body includes a recessed portion that is open toward the crank body, and a bearing member stored in the recessed portion. A through hole through which the driving shaft passes is formed in the bearing member, and a shaft hole serving as a non-through hole in which the distal end portion of the driving shaft is fitted is formed at the central portion of the bottom surface of the recessed portion. An oil reservoir that retains a lubricating oil is formed at the boundary between the bottom surface of the recessed portion and the bearing member.

Other conventional diaphragm pumps are disclosed in documents CN 109 098 962 A and JP 2003 035267 A.

The diaphragm pump disclosed in document 1 has the following two problems with the bearing portion of the driving body.

The first problem is that coaxial adjustment is necessary between the shaft hole formed in the driving body and the recessed portion storing the bearing member, and this adjustment takes a long time. The coaxial adjustment of the driving body is work of positioning the axes of the shaft hole and bearing member on the same axis. The coaxial adjustment is important because the load at the time of rotation can be reduced by positioning the shaft hole and the bearing member on the same axis.

The coaxial adjustment is performed by machining a mold, and executed on a mold for forming the bearing member in addition to a mold for molding the driving body. The coaxial adjustment of the mold for molding the driving body includes work of adjusting the hole diameter of the shaft hole, work of adjusting the recess diameter of the recessed portion, and work of aligning the shaft hole and the recessed portion. The coaxial adjustment of the mold for forming the bearing member includes work of adjusting the inner diameter and outer diameter of the bearing member, and work of aligning the inner surface and outer surface of the bearing member.

The coaxial adjustment of the driving body is executed every time an update mold is formed, a mold is remodeled or modified, or the mold of another driving body (driving body different in material, the number of cylinders, or the like) to which the same bearing member is diverted is formed. The bearing member is smaller than the driving body. The mold for forming the bearing member is formed so that a plurality of bearing members can be molded simultaneously. When driving bodies and bearing members are produced by the same number, the mold for molding the driving body needs to be updated earlier than the mold for molding the bearing member. Since the number of times at which the coaxial adjustment is executed on the mold for molding the driving body becomes larger, it is necessary to simplify and easily execute the adjustment work on the mold for molding the driving body.

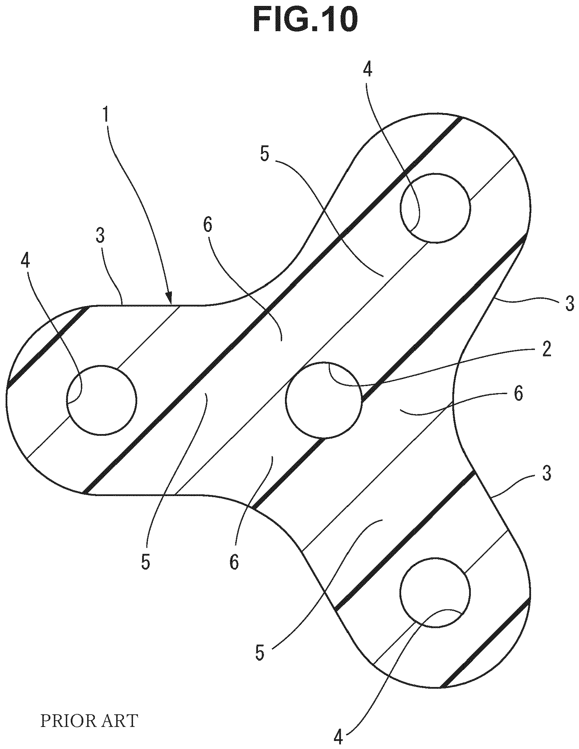

The second problem is that the wear resistance of the shaft hole formed in the driving body is low. The driving body disclosed in document 1 is formed as shown in Fig. 10. A driving body 1 shown in Fig. 10 includes a shaft hole 2 at the central portion, and three arm portions 3 radially extending from the shaft hole 2. The shaft hole 2 is a hole in which the distal end portion of a driving shaft (not shown) is rotatably fitted. A through hole 4 in which a coupling piece (not shown) provided for each deformation portion of the diaphragm is inserted is formed at the distal end portion of each arm portion 3.

The shaft hole 2 is formed at almost the same position as that of the arm portion 3 in the axial direction of the driving shaft. Around the shaft hole 2, there are thick portions 5 that continue to the arm portions 3 and are relatively thick, and thin portions 6 that exist between the arm portions 3 and are relatively thin. At the thick portions 5, many sink marks are generated at the time of molding the driving body 1, compared to the thin portions 6. At the time of molding, sink marks are nonuniformly generated around the shaft hole 2. If the sink marks around the shaft hole 2 are nonuniform, the circularity of the shaft hole 2 readily drops, the clearance between the hole wall surface of the shaft hole 2 and the driving shaft becomes excessively narrow, and the oil film between the shaft hole 2 and the driving shaft may break. At the portion where the oil film breaks, the wear proceeds and the wear resistance of the shaft hole 2 drops, as described above.

### Summary of the Invention

It is an object of the present invention to provide a diaphragm pump in which adjustment work executed on a mold for molding a driving body is simplified and the wear resistance of a bearing portion is improved.

To achieve the above object, a diaphragm pump as defined in claim 1 is provided. The diaphragm pump comprises a diaphragm including a deformation portion constituting part of a wall of a pump chamber, a crank body fixed to a rotating shaft of a motor, a driving shaft that is fixed at an eccentric position of the crank body and inclined, a driving body that is rotatably supported by the driving shaft via a bearing member and configured to convert a rotation of the crank body into a reciprocating motion and transfer the reciprocating motion to the deformation portion, and a pump mechanism configured to alternately repeat a state in which a fluid is exhausted from the pump chamber and a state in which the fluid is sucked into the pump chamber along with the reciprocating motion of the driving body, the driving body including a shaft portion configured to store and hold the bearing member in a fitted state, and an arm portion that projects outward in a radial direction from the shaft portion and is connected to the deformation portion, and the bearing member including a first bearing member and a second bearing member superimposed on each other in a state in which the first bearing member and the second bearing member are aligned in an axial direction of the driving shaft, the first bearing member being closer to the crank body than the second bearing member, a shaft hole configured to rotatably fit the driving shaft, the shaft hole including a through hole formed in the first bearing member and a non-through hole formed in the second bearing member, and an oil reservoir formed at a boundary between the first bearing member and the second bearing member.

### Brief Description of the Drawings

Fig. 1 is a sectional view of a diaphragm pump according to an embodiment of the present invention;
Fig. 2 is a perspective sectional view of a driving body in which a bearing member is assembled;
Fig. 3 is an exploded perspective view of the driving body and the bearing member;
Fig. 4 is an exploded perspective view of the driving body and the bearing member;
Fig. 5A is a bottom view of the driving body, and Fig. 5B is a sectional view of the driving body;
Fig. 6A is a plan view of a first bearing member, and Fig. 6B is a sectional view of the first bearing member;
Fig. 7A is a bottom view of a second bearing member, and Fig. 7B is a sectional view of the second bearing member;
Fig. 8A is a plan view showing a modification of the first bearing member, and Fig. 8B is a sectional view of the first bearing member shown in Fig. 8A;
Fig. 9A is a bottom view showing a modification of the second bearing member, and Fig. 9B is a sectional view of the second bearing member shown in Fig. 9A; and
Fig. 10 is a sectional view of a conventional driving body.

### Description of the Preferred Embodiment

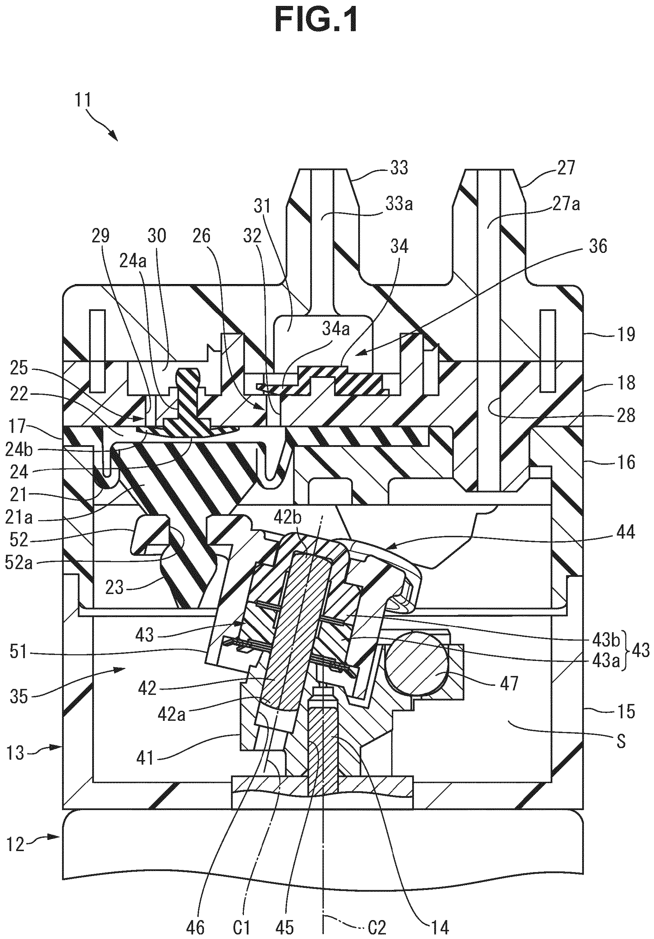

A diaphragm pump according to an embodiment of the present invention will be described in detail with reference to Figs. 1 to 8B.

A diaphragm pump 11 shown in Fig. 1 is attached to a motor 12 at the lowest position in Fig. 1, and driven by the motor 12 to operate. The diaphragm pump 11 according to the embodiment is a pump that sucks and exhausts air.

The diaphragm pump 11 includes a housing 13 fixed to the motor 12. Functional components constituting the diaphragm pump 11 are held by the housing 13.

### (Housing)

The housing 13 is formed into a columnar shape by combining a plurality of members in the axial direction of the motor 12, and is positioned on the same axis as that of a rotating shaft 14 of the motor 12. The plurality of members constituting the housing 13 are a bottom body 15 of a bottomed cylindrical shape attached to the motor 12, a diaphragm holder 16 attached to the opening portion of the bottom body 15, a disk-like valve holder 18 attached to the diaphragm holder 16 in a state in which a diaphragm 17 (to be described later) is sandwiched between the valve holder 18 and the diaphragm holder 16, and a lid body 19 so attached as to overlap the valve holder 18.

The diaphragm 17 is held between the diaphragm holder 16 and the valve holder 18. The diaphragm 17 has a plurality of cup-like deformation portions 21 that are open toward the valve holder 18. The deformation portions 21 are provided at positions where they divide the diaphragm 17 into a plurality of parts in the circumferential direction of the housing 13. Three deformation portions 21 according to the embodiment are respectively provided at positions where they divide the housing 13 into three equally in the circumferential direction.

The opening portion of each deformation portion 21 is closed by the valve holder 18. A pump chamber 22 is formed between the deformation portion 21 and the valve holder 18. The deformation portion 21 constitutes part of the wall of the pump chamber 22. A coupling piece 23 projecting in a direction opposite to the pump chamber 22 is provided on a bottom wall 21a of the cup-like deformation portion 21.

### (Pump Mechanism)

At a portion of the valve holder 18 that constitutes the wall of the pump chamber 22, a suction valve 24 is provided, and a suction passage 25 and an exhaust passage 26 are open. The suction valve 24 is formed from a rubber material and is provided for each pump chamber 22. The suction valve 24 according to the embodiment includes a shaft portion 24a that passes through the valve holder 18 and is fixed to the valve holder 18, and a valve body 24b in tight contact with a wall surface of the valve holder 18 on the pump chamber 22 side.

The suction passage 25 is formed by connecting a plurality of holes, a space, and the like. The upstream end of the suction passage 25 according to the embodiment is constituted by a suction pipe 27 provided at the peripheral portion of the lid body 19. An internal passage 27a of the suction pipe 27 communicates with a space S in the diaphragm holder 16 via a first through hole 28 of the valve holder 18. The downstream end of the suction passage 25 is constituted by a second through hole 29 open in the pump chamber 22 through the valve holder 18.

The second through hole 29 makes the pump chamber 22 communicate with a suction fluid chamber 30 formed between the valve holder 18 and the lid body 19. The suction fluid chamber 30 is connected to the above-mentioned space S via a fluid channel (not shown). The suction fluid chamber 30 is formed into an annular shape on the same axis as that of the housing 13 and communicates with each pump chamber 22 via the second through hole 29 of the pump chamber 22, details of which are not shown. The opening portion of the second through hole 29 on the pump chamber 22 side is closed by the valve body 24b of the suction valve 24.

The exhaust passage 26 is constituted by an exhaust fluid chamber 31 formed at the shaft center portion of the housing 13 between the valve holder 18 and the lid body 19, a third through hole 32 formed in the valve holder 18 so that the exhaust fluid chamber 31 and the pump chamber 22 communicate with each other, and an exhaust pipe 33 formed at the shaft center portion of the lid body 19. An internal space 33a of the exhaust pipe 33 communicates with the exhaust fluid chamber 31. An exhaust valve 34 is provided in the exhaust fluid chamber 31. The exhaust valve 34 includes a valve body 34a that is formed from a rubber material and is in tight contact with a wall surface of the valve holder 18 on the exhaust fluid chamber 31 side. The valve body 34a closes the opening portion of the third through hole 32.

The exhaust valve 34 and the above-described suction valve 24 are opened/closed along with an increase/decrease of the volume of the pump chamber 22. The exhaust valve 34 is opened in the contraction process in which the volume of the pump chamber 22 decreases, and is closed in the remaining time. The suction valve 24 is opened in the expansion process in which the volume of the pump chamber 22 increases, and is closed in the remaining time. The volume of the pump chamber 22 changes as the deformation portion 21 of the diaphragm 17 is pushed and pulled by a driving mechanism 35 (to be described later).

In the embodiment, a pump mechanism 36 is constituted by the suction valve 24, the exhaust valve 34, the suction pipe 27, the first through hole 28, the space S, the fluid channel (not shown), the suction fluid chamber 30, the second through hole 29, the third through hole 32, the exhaust fluid chamber 31, the exhaust pipe 33, and the like.

### (Driving Mechanism)

The driving mechanism 35 includes a crank body 41 attached to the rotating shaft 14 of the motor 12, a driving shaft 42 that is fixed to an eccentric position of the crank body 41 and inclined, and a driving body 44 rotatably supported by the driving shaft 42 via a bearing member 43.

A first shaft hole 45 serving as a non-through hole, and a second shaft hole 46 serving as a through hole are formed in the crank body 41, and a vibration suppression counterweight 47 is provided on the crank body 41. The first shaft hole 45 is formed at the shaft center portion of the crank body 41, and is open on the lower surface of the crank body 41. The second shaft hole 46 is inclined in a predetermined direction with respect to the first shaft hole 45, and is open at an eccentric position on the upper surface of the crank body 41. The second shaft hole 46 and the counterweight 47 are arranged at positions where they sandwich the first shaft hole 45.

The rotating shaft 14 is press-fitted in the first shaft hole 45. The crank body 41 is fixed to the rotating shaft 14 and rotates together with the rotating shaft 14. A first end portion 42a of the driving shaft 42 is press-fitted in the second shaft hole 46. The driving shaft 42 is supported by the crank body 41 in a state in which the first end portion 42a of the driving shaft 42 is fixed at a portion of the crank body 41 eccentric to the rotating shaft 14, and an axis C1 of the driving shaft 42 is inclined in a predetermined direction with respect to an axis C2 of the rotating shaft 14. The direction in which the driving shaft 42 is inclined is a direction in which the eccentric amount of a second end portion 42b of the driving shaft 42 with respect to the rotating shaft 14 decreases.

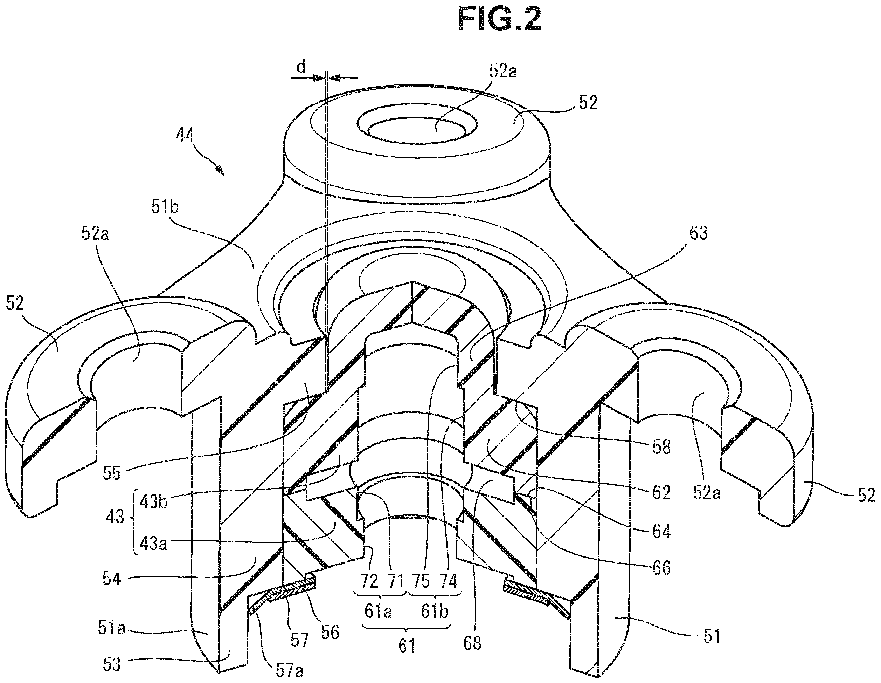

As shown in Figs. 2 to 4, the driving body 44 includes a shaft portion 51 that stores and holds the bearing member 43 (to be described later) in a fitted state, and three arm portions 52 projecting outward in the radial direction from the shaft portion 51. The shaft portion 51 includes a first end portion 51a close to the crank body 41, and a second end portion 51b spaced apart from the crank body 41 in comparison with the first end portion 51a. The arm portions 52 are connected to the second end portion 51b. In other words, the arm portions 52 are formed integrally with the end portion 51b of the shaft portion 51 on a side opposite to the crank body 41, and radially extend in three directions from the shaft portion 51. A through hole 52a through which the coupling piece 23 provided on each deformation portion 21 of the above-described diaphragm 17 is inserted is formed at the distal end portion of each arm portion 52.

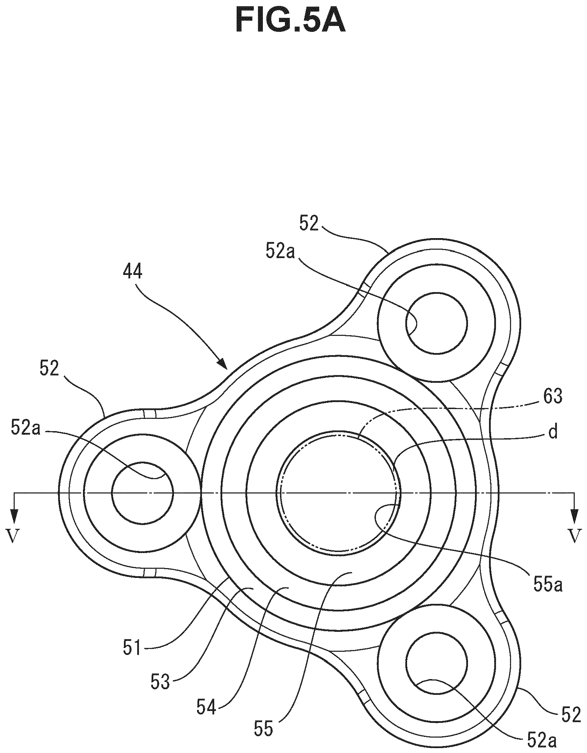

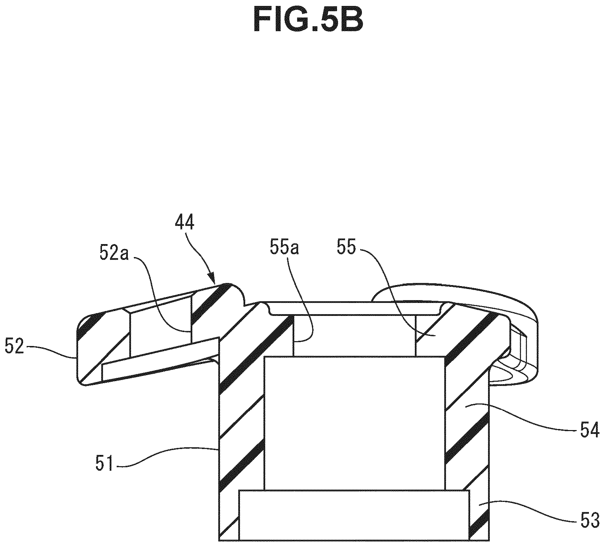

The shaft portion 51 is formed into a cylindrical shape open at two ends by using a mold (not shown) for molding the driving body 44. As shown in Figs. 2, 5A, and 5B, the shaft portion 51 includes first to third portions 53 to 55 aligned in the axial direction. Fig. 5A is a bottom view of the driving body 44, and Fig. 5B is a sectional view taken along a line V - V in Fig. 5A.

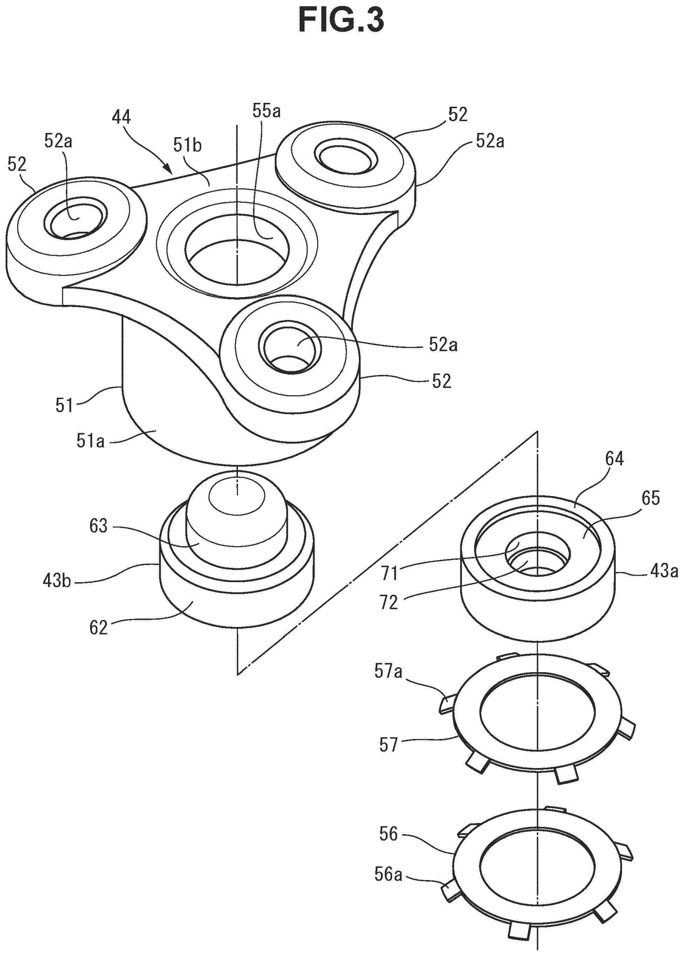

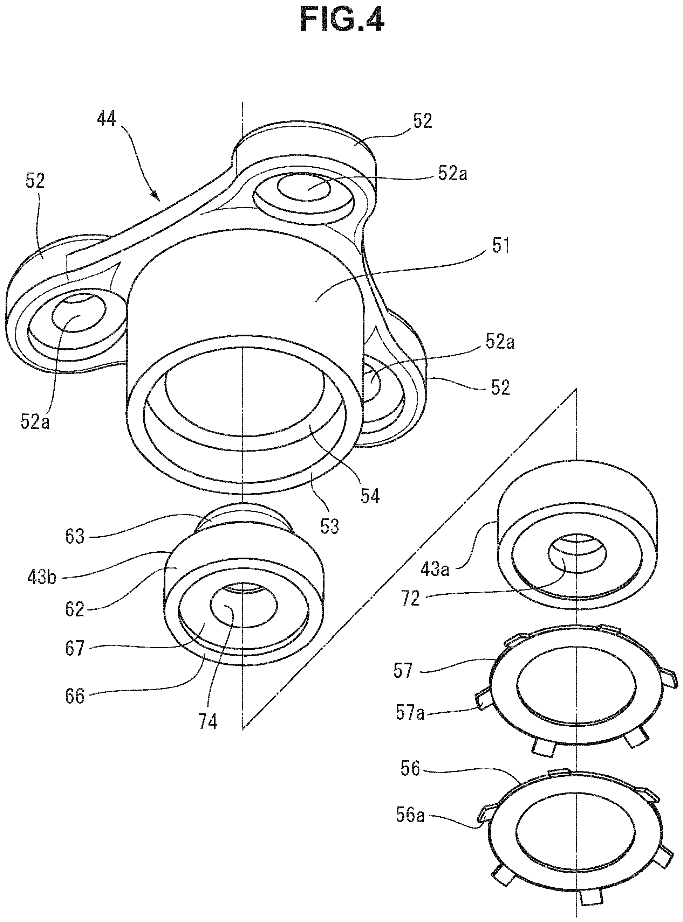

The first portion 53 includes the first end portion 51a close to the crank body 41. The first portion 53 has a function of storing ring-like latch members 56 and 57. The two latch members 56 and 57 are mounted at the first portion 53 according to the embodiment in a state in which they overlap each other in the axial direction of the shaft portion 51. The latch members 56 and 57 have a ring shape, and include many (plurality of) elastic claw pieces 56a and 57a (see Figs. 3 and 4) that press the inner surface of the first portion 53 outward in the radial direction. The latch members 56 and 57 are fixed to the first portion 53 by a frictional force generated by pressing the inner surface of the first portion 53 by the elastic claw pieces 56a and 57a.

The second portion 54 is provided at the central portion in the axial direction of the shaft portion 51, and arranged between the first portion 53 and the third portion 55. The second portion 54 has a function of storing the bearing member 43 (to be described later) in a fitted state. The inner diameter of the second portion 54 is smaller than that of the first portion 53. The above-mentioned latch members 56 and 57 prevent the bearing member 43 from detaching from the second portion 54 to the first portion 53.

The third portion 55 includes the second end portion 51b spaced apart from the crank body 41. The third portion 55 has a function of connecting the shaft portion 51 and the arm portions 52 of the driving body 44. That is, the arm portions 52 are connected to the third portion 55. The inner diameter of the third portion 55, that is, the inner diameter of an opening 55a is smaller than that of the second portion 54. The third portion 55 includes, at the boundary between the second portion 54 and the third portion 55, a ring-like end face 58 almost orthogonal to the axis of the driving shaft 42. The third portion 55 (second end portion 51b) includes an opening 55a to which a small-diameter portion 63 of a second bearing member 43b (to be described later) is inserted.

### (Bearing Member)

As shown in Fig. 2, the bearing member 43 includes a first bearing member 43a and the second bearing member 43b that overlap each other in a state in which they are aligned in the axial direction (vertical direction in Fig. 2) of the driving shaft 42. The first bearing member 43a is arranged at a position closer to the crank body 41 than the second bearing member 43b. The first bearing member 43a and the second bearing member 43b are formed into a columnar shape by a plastic material.

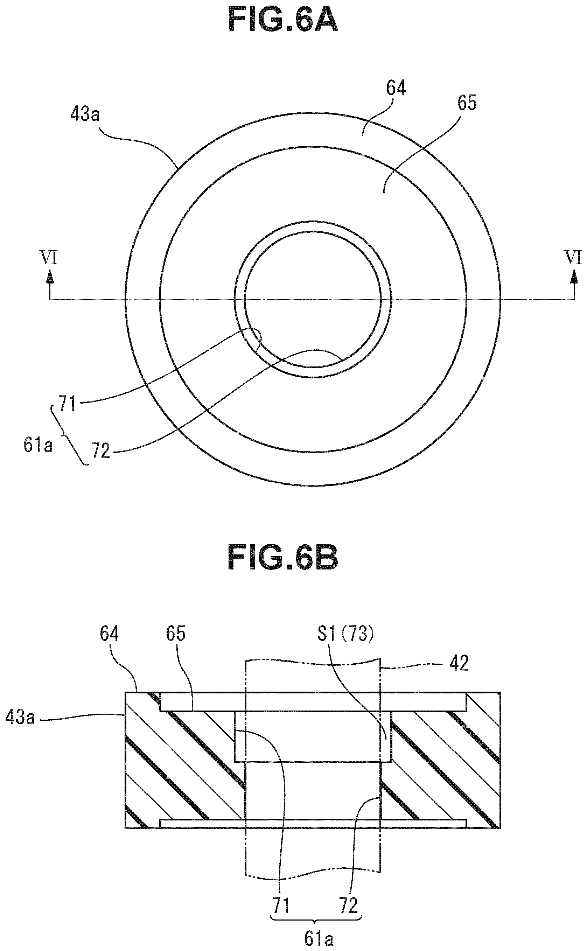

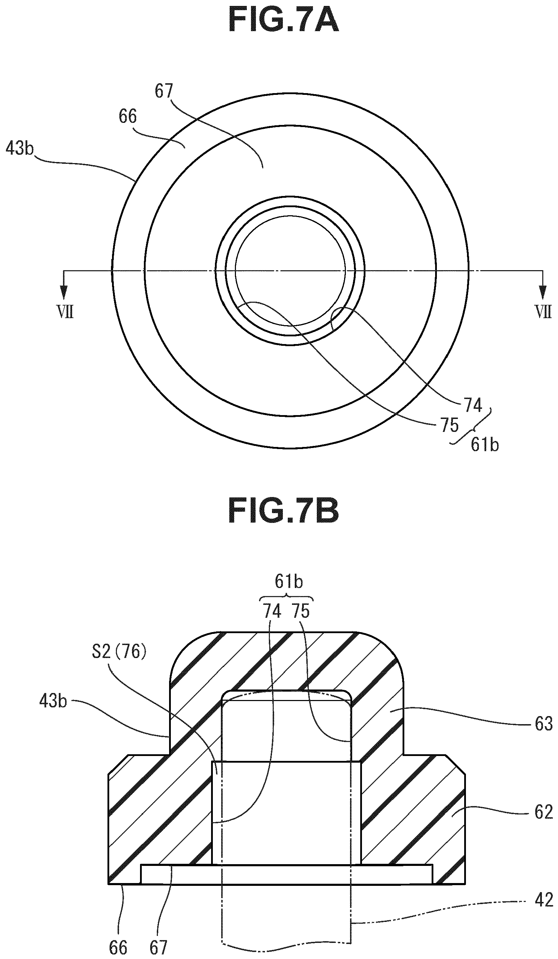

A shaft hole 61 in which the driving shaft 42 is rotatably fitted is formed in the bearing member 43. The shaft hole 61 includes a first shaft hole 61a that is a through hole formed in the first bearing member 43a, as shown in Figs. 6A and 6B, and a second shaft hole 61b that is a non-through hole formed in the second bearing member 43b, as shown in Figs. 7A and 7B. Fig. 6A is a plan view of the first bearing member 43a, and Fig. 6B is a sectional view taken along a line VI - VI in Fig. 6A. Fig. 7A is a bottom view of the second bearing member 43b, and Fig. 7B is a sectional view taken along a line VII - VII in Fig. 7A.

As shown in Fig. 6B, the first bearing member 43a is fitted in the second portion 54 of the shaft portion 51. The first bearing member 43a is formed into a columnar shape having a constant outer diameter from one end to the other end in the axial direction of the driving shaft 42. The outer diameter of the first bearing member 43a is a dimeter at which the first bearing member 43a can be press-fitted in the second portion 54 of the shaft portion 51. The first shaft hole 61a is formed at the shaft center portion of the first bearing member 43a. Details of the first shaft hole 61a will be explained later.

The second bearing member 43b is formed into a columnar shape. The second bearing member 43b includes a large-diameter portion 62 equal in outer diameter to the first bearing member 43a, and the small-diameter portion 63 smaller in outer diameter than the large-diameter portion 62. The large-diameter portion 62 is fitted in the second portion 54. The outer diameter of the large-diameter portion 62 is a diameter at which the large-diameter portion 62 can be press-fitted in the second portion 54. The second shaft hole 61b is formed at the shaft center portion of the second bearing member 43b. Details of the second shaft hole 61b will be explained later.

The sum of the length of the first bearing member 43a in the axial direction and the length of the large-diameter portion 62 of the second bearing member 43b in the axial direction is equal to the length of the second portion 54 of the shaft portion 51 in the axial direction. The first bearing member 43a and the large-diameter portion 62 of the second bearing member 43b are press-fitted in the second portion 54, and the latch members 56 and 57 are assembled into the first portion 53. As a result, the large-diameter portion 62 of the second bearing member 43b comes into contact with the end face 58 at the boundary between the second portion 54 and third portion 55 of the shaft portion 51, and the first and second bearing members 43a and 43b are held between the latch members 56 and 57 and the end face 58.

The small-diameter portion 63 of the second bearing member 43b is formed into a shape reaching the second end portion 51b of the shaft portion 51 in the axial direction of the driving shaft 42. That is, as shown in Fig. 2, the small-diameter portion 63 is inserted in the opening 55a of the third portion 55 of the shaft portion 51 and passes through the third portion 55 in the axial direction of the driving shaft 42.

The outer diameter of the small-diameter portion 63 is a diameter at which the small-diameter portion 63 can be inserted in the opening 55a of the third portion 55 in a loosely fitted state. Therefore, as shown in Fig. 5A, an annular gap d viewed from the axial direction of the driving shaft 42 is formed between the inner surface of the opening 55a and the outer surface of the small-diameter portion 63 of the second bearing member 43b. When press-fitting the large-diameter portion 62 of the second bearing member 43b in the shaft portion 51 (second portion 54), the small-diameter portion 63 contacts the second end portion 51b of the shaft portion 51 and does not receive an external force from the second end portion 51b.

As shown in Figs. 6A and 6B, the first bearing member 43a includes an inner end face 64 facing the second bearing member 43b, and a first circular recessed portion 65 is formed in the inner end face 64. As shown in Figs. 7A and 7B, the second bearing member 43b includes an inner end face 66 facing the first bearing member 43a, and a second circular recessed portion 67 is formed in the inner end face 66. The first circular recessed portion 65 and the second circular recessed portion 67 are formed into a circular shape viewed from the axial direction of the driving shaft 42, and are positioned on the same axis as that of the shaft hole 61. The first circular recessed portion 65 and the second circular recessed portion 67 have the same opening diameter and are superimposed on each other so that their opening portions face each other. By superimposing the first circular recessed portion 65 and the second circular recessed portion 67 to face each other, an oil reservoir 68 is formed from a space communicating with the shaft hole 61. The oil reservoir 68 is filled with a lubricating oil (not shown).

As shown in Fig. 6B, the first shaft hole 61a of the first bearing member 43a includes a first large-diameter hole 71 open in the first circular recessed portion 65, and a first small-diameter hole 72 open in an end portion of the first bearing member 43a close to the crank body 41. The hole diameter of the first small-diameter hole 72 is a diameter at which the driving shaft 42 can rotatably slide. The hole diameter of the first large-diameter hole 71 is larger than that of the first small-diameter hole 72 and is a diameter at which an annular space S1 is formed between the first large-diameter hole 71 and the driving shaft 42. The annular space S1 constitutes a first oil passage 73 for supplying a lubricating oil in the first circular recessed portion 65 (oil reservoir 68) from the first circular recessed portion 65 to the first small-diameter hole 72 positioned in the axial direction of the driving shaft 42. The first oil passage 73 is formed all over the first shaft hole 61a (shaft hole 61) in the circumferential direction.

As shown in Fig. 7B, the second shaft hole 61b of the second bearing member 43b includes a second large-diameter hole 74 open in the second circular recessed portion 67, and a second small-diameter hole 75 formed in the small-diameter portion 63 of the second bearing member 43b. The second small-diameter hole 75 is a non-through hole. The hole diameter of the second small-diameter hole 75 is a diameter at which the driving shaft 42 can rotatably slide. The hole diameter of the second large-diameter hole 74 is larger than that of the second small-diameter hole 75 and is a diameter at which an annular space S2 is formed between the second large-diameter hole 74 and the driving shaft 42. The annular space S2 constitutes a second oil passage 76 for supplying a lubricating oil in the second circular recessed portion 67 (oil reservoir 68) from the second circular recessed portion 67 to the second small-diameter hole 75 positioned in the axial direction of the driving shaft 42. The second oil passage 76 is formed all over the second shaft hole 61b (shaft hole 61) in the circumferential direction.

The crank body 41 and the driving body 44 are formed from a plastic material. The driving shaft 42 is formed from a metal material. The driving body 44 according to the embodiment does not contact the driving shaft 42, thus need not be formed from a material capable of supporting a sliding component, and is formed from a material having minimum wear resistance and rigidity. The bearing member 43 can slidably support the rotating driving shaft 42, and is formed from a plastic material having oil resistance.

### (Operation of Diaphragm Pump)

In the diaphragm pump 11 having the above-described structure, the rotating shaft 14 of the motor 12 rotates to rotate the crank body 41 and the driving shaft 42 about the rotating shaft 14. At this time, the rotation of the driving body 44 is interfered by the diaphragm 17, and the driving body 44 swings along with a change of the direction in which the driving shaft 42 is inclined. By the swing, each arm portion 52 pushes and pulls the deformation portion 21 of the diaphragm 17. The driving body 44 converts the rotation of the rotating shaft 14 into a reciprocating motion, and transfers the reciprocating motion to the deformation portion 21 of the diaphragm 17.

As the deformation portion 21 is pulled by the arm portion 52 toward the motor 12 and increases, the volume of the pump chamber 22 to open the suction valve 24 and suck air from the suction pipe 27 into the pump chamber 22 through the suction passage 25. On the other hand, as the deformation portion 21 of the diaphragm 17 is pushed by the arm portion 52 toward the valve holder 18, the deformation portion 21 contracts and the volume of the pump chamber 22 decreases to open the exhaust valve 34 and exhaust the air in the pump chamber 22 from the exhaust pipe 33 through the exhaust passage 26. The crank body 41 continuously rotates to cause the pump mechanism 36 to alternately repeat a state in which air is exhausted from the pump chamber 22 and a state in which air is sucked into the pump chamber 22.

When the diaphragm pump 11 operates in this manner, the driving shaft 42 rotates while coming into contact with the first small-diameter hole 72 of the first bearing member 43a and the second small-diameter hole 75 of the second bearing member 43b. That is, the driving shaft 42 slides with respect to the shaft hole 61.

The oil reservoir 68 is open in the shaft hole 61. The lubricating oil in the oil reservoir 68 flows through the first and second oil passages 73 and 76 formed from small gaps between the driving shaft 42 and the first and second large-diameter holes 71 and 74, reaches the first and second small-diameter holes 72 and 75, and lubricates them. Hence, the lubricating oil can be supplied from the oil reservoir 68 to the first and second small-diameter holes 72 and 75.

In the embodiment, the driving body 44 does not include a shaft hole in which the driving shaft 42 is rotatably fitted. Coaxial adjustment, which has conventionally been executed, need not be executed on the mold for molding the driving body 44. The coaxial adjustment is executed on molds for molding the first bearing member 43a and the second bearing member 43b. By executing the coaxial adjustment, the outer diameters of the first bearing member 43a and second bearing member 43b are determined. To fit the outer diameter, work of adjusting the inner diameter of the second portion 54 of the driving body 44 is executed on the mold for molding the driving body 44. The adjustment work requires high accuracy equal to the conventional one. However, the embodiment can be adopted to decrease the labor of mold processing and inspection in mold formation and remodeling/modification.

The first and second bearing members 43a and 43b according to the embodiment are formed separately from the driving body 44, and are not influenced by a sink mark generated at the arm portions 52 at the time of molding the driving body 44. The circularity of the first small-diameter hole 72 of the first bearing member 43a and the second small-diameter hole 75 of the second bearing member 43b can be kept high. A clearance between the first and second small-diameter holes 72 and 75 and the driving shaft 42 can be ensured, an oil film can be continuously generated, and the wear resistance of the shaft hole 61 is improved.

According to the embodiment, there can be provided the diaphragm pump 11 in which the adjustment work executed on the mold for molding the driving body 44 is simplified and the wear resistance of the bearing portion is improved.

The oil reservoir 68 according to the embodiment is formed by the first circular recessed portion 65 formed in the inner end face 64 of the first bearing member 43a, and the second circular recessed portion 67 formed in the inner end face 66 of the second bearing member 43b. The shaft hole 61 includes the first and second oil passages 73 and 76 formed so that the lubricating oil in the first and second circular recessed portions 65 and 67 flows from the first and second circular recessed portions 65 and 67 in the axial direction. The lubricating oil can be supplied to the first and second small-diameter holes 72 and 75 to lubricate the sliding portion between the driving shaft 42 and the first and second bearing members 43a and 43b. Although the diaphragm pump 11 includes the two bearing members (first bearing member 43a and second bearing member 43b), the bearing portion can be reliably lubricated.

The arm portion 52 of the driving body 44 according to the embodiment is formed integrally with the second end portion 51b of the shaft portion 51. The second bearing member 43b is formed into a shape reaching the second end portion 51b in the axial direction of the driving shaft 42. The annular gap d viewed from the axial direction of the driving shaft 42 is formed between the opening 55a formed at the second end portion 51b and the second bearing member 43b.

Thus, even if the large-diameter portion 62 of the second bearing member 43b is press-fitted in the second portion 54 of the shaft portion 51, no load is applied from the shaft portion 51 to the small-diameter portion 63. Even if the second end portion 51b of the shaft portion 51 is deformed under the influence of a sink mark generated at the arm portion 52 of the driving body 44 at the time of molding, the deformation is absorbed by the annular gap d, and no press force is applied from the end portion of the shaft portion 51 to the second bearing member 43b. The circularity of the small-diameter portion 63 of the second bearing member 43b can be kept higher, and the wear resistance of the second bearing member 43b can be further improved.

### (Modification of Oil Passage)

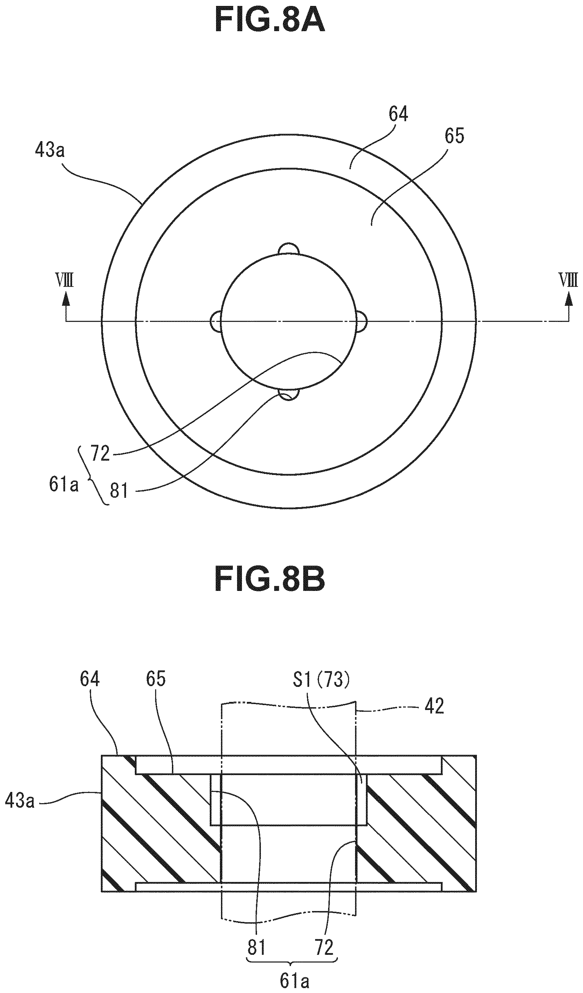

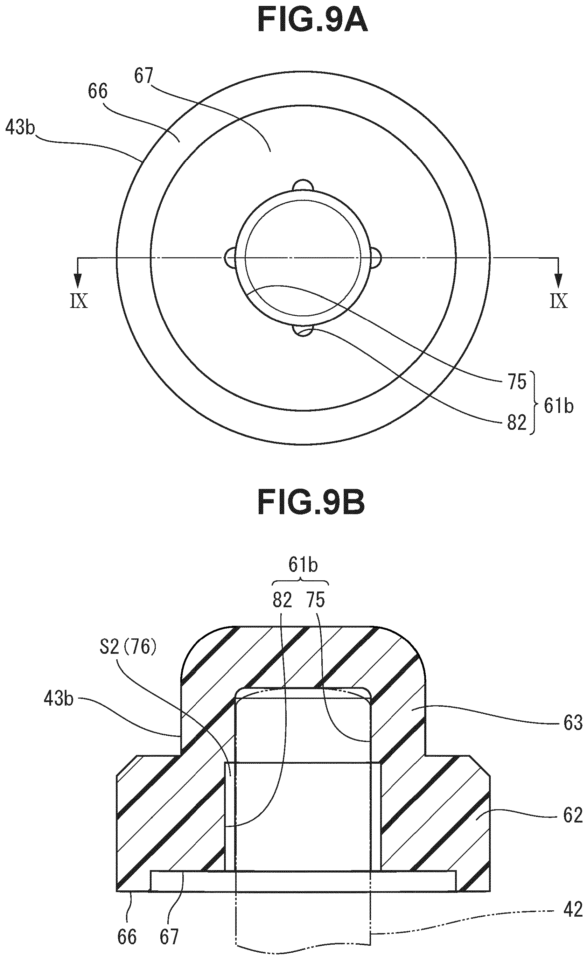

The oil passage can also be constituted as shown in Figs. 8A to 9B. In Figs. 8A to 9B, the same reference numerals as those in Figs. 1 to 7B denote the same or similar parts, and a detailed description thereof will be omitted. Fig. 8A is a plan view of a modification of the first bearing member 43a, and Fig. 8B is a sectional view taken along a line VIII - VIII in Fig. 8A. Fig. 9A is a bottom view of a modification of the second bearing member 43b, and Fig. 9B is a sectional view taken along a line IX - IX in Fig. 9A.

The first shaft hole 61a shown in Figs. 8A and 8B includes a first oil passage 81 constituted by a plurality of grooves extending in the axial direction of the driving shaft 42 from the first circular recessed portion 65 (oil reservoir 68) toward the inside of the first bearing member 43a. The second shaft hole 61b shown in Figs. 9A and 9B includes a second oil passage 82 constituted by a plurality of grooves extending in the axial direction of the driving shaft 42 from the second circular recessed portion 67 (oil reservoir 68) toward the inside of the second bearing member 43b. The plurality of grooves constituting the first oil passage 81 and the plurality of grooves constituting the second oil passage 82 are aligned at a predetermined interval in the circumferential direction of the driving shaft 42. Portions where no groove (first and second oil passages 81 and 82) is formed in the first shaft hole 61a and the second shaft hole 61b are sliding surfaces on which the driving shaft 42 rotatably slides. Even if the oil passages 81 and 82 are constituted in this way, the bearing portion of the driving shaft 42 can be reliably lubricated.

The shaft hole 61 in the above-described embodiment includes the first oil passage 73 or 81 and the second oil passage 76 or 82, and is formed to guide the lubricating oil from the oil reservoir 68 in two directions (for example, both up and down) in the axial direction of the driving shaft 42. However, the diaphragm pump 11 can employ a structure in which the lubricating oil is guided from the oil reservoir 68 in one direction (for example, up or down) in the axial direction of the driving shaft 42. That is, the oil reservoir 68 can be formed by a circular recessed portion formed in either one of the inner end face 64 of the first bearing member 43a and the inner end face 66 of the second bearing member 43b. The oil passage of the shaft hole 61 can be formed to extend from the first and second circular recessed portions 65 and 67 in only one direction (for example, up) or the other direction (for example, down) in the axial direction of the driving shaft 42.

The diaphragm pump 11 according to the above-described embodiment is a three-cylinder diaphragm pump including the three pump chambers 22. However, the number of cylinders of the diaphragm pump 11 can be properly changed into a single cylinder, two cylinders, four or more cylinders, or the like.

### (Example)

A diaphragm pump according to an example of the present invention includes a diaphragm including a deformation portion constituting part of a wall of a pump chamber, a crank body fixed to a rotating shaft of a motor, a driving shaft that is fixed at an eccentric position of the crank body and inclined, a driving body that is rotatably supported by the driving shaft via a bearing member and configured to convert a rotation of the crank body into a reciprocating motion and transfer the reciprocating motion to the deformation portion, and a pump mechanism configured to alternately repeat a state in which a fluid is exhausted from the pump chamber and a state in which the fluid is sucked into the pump chamber along with the reciprocating motion of the driving body, the driving body including a shaft portion configured to store and hold the bearing member in a fitted state, and an arm portion that projects outward in a radial direction from the shaft portion and is connected to the deformation portion, and the bearing member including a first bearing member and a second bearing member superimposed on each other in a state in which the first bearing member and the second bearing member are aligned in an axial direction of the driving shaft, the first bearing member being closer to the crank body than the second bearing member, a shaft hole configured to rotatably fit the driving shaft, the shaft hole including a through hole formed in the first bearing member and a non-through hole formed in the second bearing member, and an oil reservoir formed at a boundary between the first bearing member and the second bearing member.

According to the example, a shaft hole in which the driving shaft is rotatably fitted need not be provided in the driving body. Adjustment work executed on the mold for molding the driving body is only work of adjusting the inner diameter of a portion in which the bearing member is fitted. The first and second bearing members are formed separately from the arm portions of the driving body, and are not influenced by a sink mark generated at the time of molding the driving body. Therefore, the circularity of the shaft holes formed in the first and second bearing members can be kept high. According to the embodiment, there can be provided the diaphragm pump in which the adjustment work executed on the mold for molding the driving body is simplified and the wear resistance of the bearing portion is improved.

The direction in which the driving shaft is inclined is a direction in which the eccentric amount of the end portion of the driving shaft inserted in the shaft hole of the bearing member with respect to the rotating shaft decreases.

The first bearing member and the second bearing member may be formed into a columnar shape.

The oil reservoir may be open all over the shaft hole in a circumferential direction. The oil reservoir may be open in a partial region of the shaft hole in the circumferential direction.

The first bearing member may include a first end face facing the second bearing member, the second bearing member may include a second end face facing the first bearing member, and the oil reservoir may include a circular recessed portion formed in at least one of the first end face and the second end face.

In the first example of the shaft hole, the shaft hole further includes a small-diameter hole having a diameter at which the driving shaft is slidable, and a large-diameter hole that is open in the circular recessed portion and has a diameter larger than the diameter of the small-diameter hole.

In the second example of the shaft hole, the shaft hole further includes a plurality of grooves extending in the axial direction from the circular recessed portion.

In the third example of the shaft hole, the shaft hole further includes an oil passage formed to supply a lubricating oil in the oil reservoir from the oil reservoir in the axial direction. The oil passage may be formed all over the shaft hole in the circumferential direction. Alternatively, the oil passage may include a plurality of grooves extending in the axial direction from the oil reservoir.

The shaft portion may include a first end portion, and a second end portion spaced apart from the crank body in comparison with the first end portion. In this case, the arm portion is connected to the second end portion. The second end portion includes an opening in which the second bearing member is inserted. An annular gap is formed between an inner surface of the opening and an outer surface of the second bearing member.

The shaft portion may further include a first portion including the first end portion, a second portion configured to store the bearing member in the fitted state, and a third portion including the second end portion. The second portion is arranged between the first portion and the third portion. The first portion may be configured to store a latch member configured to prevent the bearing member from detaching from the second portion to the first portion.

An inner diameter of the opening included in the third portion may be smaller than an inner diameter of the second portion, and the third portion may include, at a boundary between the second portion and the third portion, an end face substantially orthogonal to an axis of the driving shaft. An angle defined by the axis of the driving shaft and the end face may not be 90°. Further, the inner diameter of the second portion may be smaller than the inner diameter of the first portion.

The second bearing member may include a large-diameter portion configured to fit in the second portion, and a small-diameter portion configured to be inserted in the opening included in the third portion and to form the annular gap between the inner surface of the opening and an outer surface of the small-diameter portion. The outer diameter of the small-diameter portion is smaller than the outer diameter of the large-diameter portion. The outer diameter of the small-diameter portion is smaller than the inner diameter of the opening by a length equivalent to the annular gap.

The arm portion of the driving body may be formed integrally with the second end portion of the shaft portion. The second bearing member may be formed into a shape reaching the second end portion of the shaft portion in the axial direction of the driving shaft. An annular gap viewed from the axial direction of the driving shaft may be formed between the second end portion of the shaft portion and the second bearing member.

## Claims

1. A diaphragm pump comprising:
a diaphragm (17) including a deformation portion (21) constituting part of a wall of a pump chamber (22);
a crank body (41) fixed to a rotating shaft (14) of a motor (12);
a driving shaft (42) that is fixed at an eccentric position of the crank body (41) and inclined;
a driving body (44) that is rotatably supported by the driving shaft (42) via a bearing member (43) and configured to convert a rotation of the crank body (41) into a reciprocating motion and transfer the reciprocating motion to the deformation portion (21); and
a pump mechanism (36) configured to alternately repeat a state in which a fluid is exhausted from the pump chamber (22) and a state in which the fluid is sucked into the pump chamber (22) along with the reciprocating motion of the driving body (44),
the driving body (44) including:
a shaft portion (51) configured to store and hold the bearing member (43) in a fitted state; and
an arm portion (52) that projects outward in a radial direction from the shaft portion (51) and is connected to the deformation portion (21), and
the bearing member (43) including:
a first bearing member (43a) and a second bearing member (43b) superimposed on each other in a state in which the first bearing member (43a) and the second bearing member (43b) are aligned in an axial direction of the driving shaft (42), the first bearing member (43a) being closer to the crank body (41) than the second bearing member (43b);
a shaft hole (61) configured to rotatably fit the driving shaft (42), the shaft hole (61) including a through hole (61a) formed in the first bearing member (43a) and a non-through hole (61b) formed in the second bearing member (43b); and
an oil reservoir (68) formed at a boundary between the first bearing member (43a) and the second bearing member (43b)
wherein the first bearing member (43a) includes a first end face (64) facing the second bearing member (43b), and
the second bearing member (43b) includes a second end face (66) facing the first bearing member (43a),
**characterized in that**
the oil reservoir (68) includes a circular recessed portion (65, 67) formed in at least one of the first end face (64) and the second end face (66),
the first bearing member (43a) and the second bearing member (43b) are separated, and
the first end face (64) and the second end face (66) are configured to contact with each other except for the oil reservoir (68).

2. The pump according to claim 1, wherein the oil reservoir (68) is open all over the shaft hole (61) in a circumferential direction.

3. The pump according to claim 2, wherein the shaft hole (61) further includes:
a small-diameter hole (72, 75) having a diameter at which the driving shaft (42) is slidable; and
a large-diameter hole (71, 74) that is open in the circular recessed portion (65, 67) and has a diameter larger than the diameter of the small-diameter hole (72, 75).

4. The pump according to claim 2, wherein the shaft hole (61) further includes a plurality of grooves extending in the axial direction from the circular recessed portion (65, 67).

5. The pump according to any one of claims 1 to 2, wherein the shaft hole (61) further includes an oil passage (73, 76, 81, 82) formed to supply a lubricating oil in the oil reservoir (68) from the oil reservoir (68) in the axial direction.

6. The pump according to claim 5, wherein the oil passage (73, 76) is formed all over the shaft hole (61) in the circumferential direction.

7. The pump according to claim 6, wherein the oil passage (81, 82) includes a plurality of grooves extending in the axial direction from the oil reservoir (68).

8. The pump according to any one of claims 1 to 7, wherein the shaft portion (51) includes a first end portion (51a), and a second end portion (51b) spaced apart from the crank body (41) in comparison with the first end portion (51a),
the arm portion (52) is connected to the second end portion (51b),
the second end portion (51b) includes an opening (55a) in which the second bearing member (43b) is inserted, and
an annular gap (d) is formed between an inner surface of the opening (55a) and an outer surface of the second bearing member (43b).

9. The pump according to claim 8, wherein the shaft portion (51) further includes:
a first portion (53) including the first end portion (51a);
a second portion (54) configured to store the bearing member (43) in the fitted state; and
a third portion (55) including the second end portion (51b),
the second portion (54) is arranged between the first portion (53) and the third portion (55), and
the first portion (53) is configured to store a latch member (56, 57) configured to prevent the bearing member (43) from detaching from the second portion (54) to the first portion (53).

10. The pump according to claim 9, wherein an inner diameter of the opening (55a) included in the third portion (55) is smaller than an inner diameter of the second portion (54), and
the third portion (55) includes, at a boundary between the second portion (54) and the third portion (55), an end face (58) substantially orthogonal to an axis of the driving shaft (42).

11. The pump according to claim 10, wherein the second bearing member (43b) includes:
a large-diameter portion (62) configured to fit in the second portion (54); and
a small-diameter portion (63) configured to be inserted in the opening (55a) included in the third portion (55) and to form the annular gap (d) between the inner surface of the opening (55a) and an outer surface of the small-diameter portion (63).

## Patentansprüche

1. Membranpumpe, umfassend:
eine Membran (17) mit einem Deformationsabschnitt (21), der einen Teil einer Wand einer Pumpkammer (22) bildet;
einen Kurbelkörper (41), der an einer rotierenden Welle (14) eines Motors (12) befestigt ist;
eine Antriebswelle (42), die an einer außermittigen Position des Kurbelkörpers (41) befestigt und geneigt ist;
einen Antriebskörper (44), der von der Antriebswelle (42) über ein Lagerelement (43) drehbar gelagert wird und so konfiguriert ist, dass er eine Drehung des Kurbelkörpers (41) in eine Hin- und Herbewegung umwandelt und die Hin- und Herbewegung auf den Deformationsabschnitt (21) überträgt; und
einen Pumpmechanismus (36), der so konfiguriert ist, dass er abwechselnd einen Zustand, in dem ein Fluid aus der Pumpkammer (22) ausgestoßen wird, und einen Zustand, in dem das Fluid in die Pumpkammer (22) gesaugt wird, zusammen mit der Hin- und Herbewegung des Antriebskörpers (44) wiederholt,
wobei der Antriebskörper (44) enthält:
einen Welleabschnitt (51), der so konfiguriert ist, dass er das Lagerelement (43) in einem eingepassten Zustand lagert und hält; und
einen Armabschnitt (52), der in einer radialen Richtung von dem Welleabschnitt (51) nach außen vorsteht und mit dem Deformationsabschnitt (21) verbunden ist, und
wobei das Lagerelement (43) enthält:
ein erstes Lagerelement (43a) und ein zweites Lagerelement (43b), die übereinander angeordnet sind, in einem Zustand, in dem das erste Lagerelement (43a) und das zweite Lagerelement (43b) in einer axialen Richtung der Antriebswelle (42) aneinander ausgerichtet sind, wobei das erste Lagerelement (43a) näher an dem Kurbelkörper (41) ist als das zweite Lagerelement (43b);
ein Wellenloch (61), das so konfiguriert ist, dass es die Antriebswelle (42) drehbar aufnimmt, wobei das Wellenloch (61) ein in dem ersten Lagerelement (43a) ausgebildetes Durchgangsloch (61a) und ein in dem zweiten Lagerelement (43b) ausgebildetes nicht durchgehendes Loch (61b) umfasst; und
ein Ölreservoir (68), das an einer Grenze zwischen dem ersten Lagerelement (43a) und dem zweiten Lagerelement (43b) ausgebildet ist
wobei das erste Lagerelement (43a) eine erste Endfläche (64) umfasst, die dem zweiten Lagerelement (43b) zugewandt ist, und
das zweite Lagerelement (43b) eine zweite Endfläche (66) umfasst, die dem ersten Lagerelement (43a) zugewandt ist,
**dadurch gekennzeichnet, dass**
das Ölreservoir (68) einen kreisförmigen vertieften Abschnitt (65, 67) umfasst, der in mindestens einer der ersten Endfläche (64) und der zweiten Endfläche (66) ausgebildet ist,
das erste Lagerelement (43a) und das zweite Lagerelement (43b) voneinander getrennt sind und
die erste Endfläche (64) und die zweite Endfläche (66) so konfiguriert sind, dass sie miteinander in Kontakt stehen, mit Ausnahme des Ölreservoirs (68).

2. Pumpe nach Anspruch 1, wobei das Ölreservoir (68) in Umfangsrichtung über das gesamte Wellenloch (61) offen ist.

3. Pumpe nach Anspruch 2, wobei das Wellenloch (61) ferner umfasst:
ein Loch (72, 75) mit kleinem Durchmesser, das einen Durchmesser aufweist, bei dem die Antriebswelle (42) gleiten kann; und
ein Loch (71, 74) mit großem Durchmesser, das in dem kreisförmigen vertieften Abschnitt (65, 67) offen ist und einen Durchmesser aufweist, der größer ist als der Durchmesser des Lochs (72, 75) mit kleinem Durchmesser.

4. Pumpe nach Anspruch 2, wobei das Wellenloch (61) ferner eine Vielzahl von Nuten umfasst, die sich von dem kreisförmigen vertieften Abschnitt (65, 67) aus in axialer Richtung erstrecken.

5. Pumpe nach einem der Ansprüche 1 bis 2, wobei das Wellenloch (61) ferner einen Öldurchlass (73, 76, 81, 82) umfasst, der so ausgebildet ist, dass er ein im Ölreservoir (68) befindliches Schmieröl vom Ölreservoir (68) aus in axialer Richtung zuführt.

6. Pumpe nach Anspruch 5, wobei der Öldurchlass (73, 76) über die gesamte Wellenloch (61) in Umfangsrichtung ausgebildet ist.

7. Pumpe nach Anspruch 6, wobei der Öldurchlass (81, 82) eine Vielzahl von Nuten umfasst, die sich in axialer Richtung vom Ölreservoir (68) erstrecken.

8. Pumpe gemäß einem der Ansprüche 1 bis 7, wobei der Wellenabschnitt (51) einen ersten Endabschnitt (51a) und einen zweiten Endabschnitt (51b) umfasst, der im Vergleich zum ersten Endabschnitt (51a) vom Kurbelkörper (41) beabstandet ist,
der Armabschnitt (52) mit dem zweiten Endabschnitt (51b) verbunden ist,
der zweite Endabschnitt (51b) eine Öffnung (55a) aufweist, in die das zweite Lagerelement (43b) eingesetzt ist, und
ein ringförmiger Spalt (d) zwischen einer Innenfläche der Öffnung (55a) und einer Außenfläche des zweiten Lagerelements (43b) ausgebildet ist.

9. Pumpe gemäß Anspruch 8, wobei der Wellenabschnitt (51) ferner umfasst:
einen ersten Abschnitt (53), der den ersten Endabschnitt (51a) umfasst;
einen zweiten Abschnitt (54), der so konfiguriert ist, dass er das Lagerelement (43) im eingepassten Zustand aufnimmt; und
einen dritten Abschnitt (55), der den zweiten Endabschnitt (51b) umfasst,
wobei der zweite Abschnitt (54) zwischen dem ersten Abschnitt (53) und dem dritten Abschnitt (55) angeordnet ist und
der erste Abschnitt (53) so konfiguriert ist, dass er ein Riegelelement (56, 57) aufnimmt, das so konfiguriert ist, dass es verhindert, dass sich das Lagerelement (43) vom zweiten Abschnitt (54) hin zum ersten Abschnitt (53) löst.

10. Pumpe gemäß Anspruch 9, wobei ein Innendurchmesser der Öffnung (55a), die von dem dritten Abschnitt (55) umfasst wird, kleiner ist als ein Innendurchmesser des zweiten Abschnitts (54), und
der dritte Abschnitt (55) an einer Grenze zwischen dem zweiten Abschnitt (54) und dem dritten Abschnitt (55) eine Endfläche (58) umfasst, die im Wesentlichen orthogonal zu einer Achse der Antriebswelle (42) ist.

11. Pumpe nach Anspruch 10, wobei das zweite Lagerelement (43b) Folgendes umfasst:
einen Abschnitt (62) mit großem Durchmesser, der so konfiguriert ist, dass er in den zweiten Abschnitt (54) passt; und
einen Abschnitt (63) mit kleinem Durchmesser, der so konfiguriert ist, dass er in die Öffnung (55a) eingesetzt werden kann, die in dem dritten Abschnitt (55) enthalten ist, und den ringförmigen Spalt (d) zwischen der Innenfläche der Öffnung (55a) und einer Außenfläche des Abschnitts (63) mit kleinem Durchmesser bildet.

## Revendications

1. Pompe à membrane comprenant :
une membrane (17) comportant une portion de déformation (21) faisant partie d'une paroi d'une chambre de pompe (22) ;
un corps de manivelle (41) fixé à un arbre rotatif (14) d'un moteur (12) ;
un arbre d'entraînement (42) qui est fixé à une position excentrique du corps de manivelle (41) et incliné ;
un corps d'entraînement (44) qui est porté de manière rotative par l'arbre d'entraînement (42) via un organe formant palier (43) et configuré pour convertir une rotation du corps de manivelle (41) en un mouvement de va-et-vient et transférer le mouvement de va-et-vient à la portion de déformation (21) ; et
un mécanisme de pompe (36) configuré pour répéter alternativement un état dans lequel un fluide est évacué de la chambre de pompe (22) et un état dans lequel le fluide est aspiré dans la chambre de pompe (22) conjointement avec le mouvement de va-et-vient du corps d'entraînement (44),
le corps d'entraînement (44) comportant :
une portion d'arbre (51) configurée pour contenir et retenir l'organe formant palier (43) dans un état emboîté ; et
une portion de bras (52) qui fait saillie vers l'extérieur dans une direction radiale à partir de la portion d'arbre (51) et est reliée à la portion de déformation (21), et l'organe formant palier (43) comportant :
un premier organe formant palier (43a) et un deuxième organe formant palier (43b) superposés l'un sur l'autre dans un état dans lequel le premier organe formant palier (43a) et le deuxième organe formant palier (43b) sont alignés dans une direction axiale de l'arbre d'entraînement (42), le premier organe formant palier (43a) étant plus proche du corps de manivelle (41) que le deuxième organe formant palier (43b) ;
un trou d'arbre (61) configuré pour que l'arbre d'entraînement (42) s'y emboîte de manière rotative, le trou d'arbre (61) comportant un trou traversant (61a) formé dans le premier organe formant palier (43a) et un trou non traversant (61b) formé dans le deuxième organe formant palier (43b) ; et
un réservoir d'huile (68) formé au niveau d'une limite entre le premier organe formant palier (43a) et le deuxième organe formant palier (43b)
dans laquelle le premier organe formant palier (43a) comporte une première face d'extrémité (64) faisant face au deuxième organe formant palier (43b), et
le deuxième organe formant palier (43b) comporte une deuxième face d'extrémité (66) faisant face au premier organe formant palier (43a),
**caractérisée en ce que**
le réservoir d'huile (68) comporte une portion en retrait circulaire (65, 67) formée dans au moins l'une parmi la première face d'extrémité (64) et la deuxième face d'extrémité (66),
le premier organe formant palier (43a) et le deuxième organe formant palier (43b) sont séparés, et
la première face d'extrémité (64) et la deuxième face d'extrémité (66) sont configurées pour être en contact l'une avec l'autre à l'exception du réservoir d'huile (68).

2. Pompe selon la revendication 1, dans laquelle le réservoir d'huile (68) est ouvert sur tout le trou d'arbre (61) dans une direction circonférentielle.

3. Pompe selon la revendication 2, dans laquelle le trou d'arbre (61) comporte en outre :
un trou de petit diamètre (72, 75) ayant un diamètre auquel l'arbre d'entraînement (42) est apte à coulisser ; et
un trou de grand diamètre (71, 74) qui est ouvert dans la portion en retrait circulaire (65, 67) et possède un diamètre plus grand que le diamètre du trou de petit diamètre (72, 75).

4. Pompe selon la revendication 2, dans laquelle le trou d'arbre (61) comporte en outre une pluralité de rainures s'étendant dans la direction axiale à partir de la portion en retrait circulaire (65, 67).

5. Pompe selon l'une quelconque des revendications 1 à 2, dans laquelle le trou d'arbre (61) comporte en outre un passage d'huile (73, 76, 81, 82) formé pour apporter une huile lubrifiante dans le réservoir d'huile (68) à partir du réservoir d'huile (68) dans la direction axiale.

6. Pompe selon la revendication 5, dans laquelle le passage d'huile (73, 76) est formé sur tout le trou d'arbre (61) dans la direction circonférentielle.

7. Pompe selon la revendication 6, dans laquelle le passage d'huile (81, 82) comporte une pluralité de rainures s'étendant dans la direction axiale à partir du réservoir d'huile (68).

8. Pompe selon l'une quelconque des revendications 1 à 7, dans laquelle la portion d'arbre (51) comporte une première portion d'extrémité (51a) et une deuxième portion d'extrémité (51b) espacée du corps de manivelle (41) comparativement à la première portion d'extrémité (51a), la portion de bras (52) est reliée à la deuxième portion d'extrémité (51b),
la deuxième portion d'extrémité (51b) comporte une ouverture (55a) dans laquelle le deuxième organe formant palier (43b) est inséré, et
un écartement annulaire (d) est formé entre une surface interne de l'ouverture (55a) et une surface externe du deuxième organe formant palier (43b).

9. Pompe selon la revendication 8, dans laquelle la portion d'arbre (51) comporte en outre :
une première portion (53) comportant la première portion d'extrémité (51a) ;
une deuxième portion (54) configurée pour contenir l'organe formant palier (43) dans l'état emboîté ; et
une troisième portion (55) comportant la deuxième portion d'extrémité (51b),
la deuxième portion (54) est agencée entre la première portion (53) et la troisième portion (55), et
la première portion (53) est configurée pour contenir un organe formant verrou (56, 57) configuré pour empêcher l'organe formant palier (43) de se détacher de la deuxième portion (54) vers la première portion (53).

10. Pompe selon la revendication 9, dans laquelle un diamètre interne de l'ouverture (55a) comprise dans la troisième portion (55) est plus petit qu'un diamètre interne de la deuxième portion (54), et
la troisième portion (55) comporte, au niveau d'une limite entre la deuxième portion (54) et la troisième portion (55), une face d'extrémité (58) sensiblement orthogonale à un axe de l'arbre d'entraînement (42).

11. Pompe selon la revendication 10, dans laquelle le deuxième organe formant palier (43b) comporte :
une portion de grand diamètre (62) configurée pour s'emboîter dans la deuxième portion (54) ; et
une portion de petit diamètre (63) configurée pour être insérée dans l'ouverture (55a) comprise dans la troisième portion (55) et pour former l'écartement annulaire (d) entre la surface interne de l'ouverture (55a) et une surface externe de la portion de petit diamètre (63).
